# EUROPEAN PATENT APPLICATION

(11) **EP 0 558 033 A1**
(43) Date of publication of application: **01.09.1993**
(21) Application number: 93103050.6
(22) Date of filing: 26.02.1993
(51) Int. Cl.: F16J 15/14, B29C 43/02, B29C 43/18

(54) **Sealing method of container shaped structural body**

(30) Priority: 28.02.1992 JP 43451/92; 28.02.1992 JP 43462/92
(71) Applicant: Dow Corning Toray Silicone Company, Limited, Tokyo 103 (JP)
(72) Inventor: Kihara, Kokki, Res. and Development Department, Kaigan, Ichihara-shi, Chiba Prefecture (JP); Tsuji, Yuichi, Res. and Development Department, Kaigan, Ichihara-shi, Chiba Prefecture (JP)
(74) Representative: Spott, Gottfried, Dr.

(57) **Abstract**

In a first embodiment of this invention, a heat-settable silicone rubber is cast in bead form on at least one of two fitting surfaces of a container-shaped structural body. In a second embodiment of the present invention, a heat settable silicone rubber is cast in bead form into a longitudinal groove located in at least one fitting surface of the container-shaped structural body. The surface of the silicone rubber is then cured to a smooth state using a heated concave die. Consequently, an excellent sealing effect can be realized between the two fitting surfaces using this cured-in-place method.

## Description

This invention concerns a sealing method for a container-shaped structural body by means of a heat-settable silicone rubber set between the fitting surfaces of the parts of the container-shaped structural body. In one embodiment of the method the heat-settable silicon rubber is cast into one or more longitudinal grooves in at least one of the fitting surfaces.

Silicone rubber has excellent properties, such as heat resistance, cold resistance, weatherability, electrical insulating property, water resistance, oil resistance, chemical resistance, etc., and has been widely used as a sealing material in places where a high heat resistance and a high oil resistance are demanded, such as between the oil pan and crank case of a internal combustion engine.

The application methods of the silicone rubber can be roughly divided into two types. The first type is the mold in-place gasket (MIPG) method in which a gasket is molded by means of injection molding using dies; the second is the cured in-place gasket (CIPG) method in which the room-temperature curable silicone rubber is coated in bead form on the fitting surfaces of the oil pan, etc., that are to be sealed, followed by setting in air to form the sealed portion.

In the former method, the MIPG method, although the sealing effect is excellent, the gasket has to be molded using an expensive injection molder. This is unfavorable in regard to productivity and cost. On the other hand, for the latter method, the CIPG method, the operation can be performed at the site of assembly of the parts to be sealed without any restrictions on the time and location; hence, the productivity can be significantly improved. However, for the silicone rubber a beaded coat, concavo-convex profile, or wrinkles are formed so that the sealing surface becomes uneven, and a sufficient sealing effect cannot be realized.

The purpose of this invention is to solve the aforementioned problems of the conventional methods by providing a sealing method of a container-shaped structural body, characterized by the fact that while it is a CIPG method, it had an excellent productivity and the container-shaped structural body formed has excellent sealing property.

In a first embodiment of this invention, a heat-settable silicone rubber is cast in bead form on at least one of two fitting surfaces of a container-shaped structural body. In a second embodiment of the present invention, a heat settable silicone rubber is cast in bead form into a longitudinal groove located in at least one fitting surface of the container-shaped structural body. The surface of the silicone rubber is then cured to a smooth state using a heated concave die. Consequently, an excellent sealing effect can be realized between the two fitting surfaces using this cured-in-place method.

Figure 1 is a cross-sectional view illustrating an example of a container-shaped structural body (1) to be sealed by the method of this invention.

Figure 2 is an oblique view illustrating the main portion of a configuration of this invention at the time that the uncured silicone rubber has been cast on one of the fitting surfaces, while heating of the surface of the liquid-silicone rubber by the die has not yet started.

Figure 3 is an oblique view illustrating the main portion of a configuration of this invention in the state of heating/curing of the silicone rubber by the die after the operation stage shown in Figure 2.

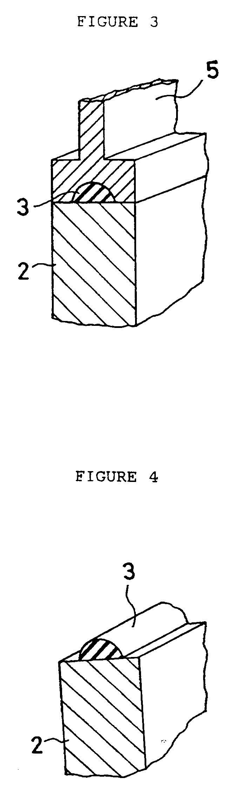

Figure 4 is an oblique view of the main portion of a configuration of this invention in the state at which the die is removed after the operational stage shown in Figure 3.

Figure 5 is a cross-section view illustrating an example of a container-shaped structural body to be sealed by the method of this invention, where one of the fitting surfaces contains a longitudinal groove into which silicone rubber is cast.

Figure 6 is an oblique view illustrating the main portion of a configuration of this invention at the time that the uncured silicone rubber has been cast into the groove formed on one of the fitting surfaces, while heating of the surface of the liquid silicone rubber by the die has not yet started.

Figure 7 is an oblique view illustrating the main portion of a configuration of this invention in the state of heating and curing of the silicon rubber by the die after the operational stage shown in Figure 6.

Figure 8 is an oblique view of the main portion of a configuration of this invention in the state at which the die is removed after the operational stage shown in Figure 7.

This invention provides a sealing method of a container-shaped structural body, characterized by the following facts: this sealing method is used for sealing the fitting surfaces of a container-shaped structural body that can be separated into at least two parts that have the aforementioned fitting surfaces facing each other. In one embodiment of this sealing method, the aforementioned surfaces are formed in a planar shape facing each other, and the uncured heat-settable silicone rubber is cast in bead form on at least one surface in the longitudinal direction. In a second embodiment of this scaling method, one or more of the aforementioned fitting surface has one or more longitudinal grooves into which heat-settable silicone rubber is cast. The surface of the aforementioned heat-settable silicone rubber is molded and cured to a smooth state by means of a heated concave molding die. The surface of the aforementioned cured heat-settable silicone rubber is then set in close contact with the fitting surface of the other part.

In this method, when the cured-in-place gasket (CIPG) method is implemented, after the heat-settable silicone rubber is cast in bead form on one of the surfaces, its surface is cured to a smooth state by a heated concave molding die. Hence, the time can be shortened, the productivity can be improved, and the sealing effect can also be improved.

According to this invention, the container-shaped structural body refers to the part that has a container shape and can be separated into at least two portions, each of which has a fitting surface, with the fitting surfaces of the portions facing each other. One or more of the fitting surfaces may have one or more longitudinal grooves. Examples of the container-shaped structural body include the oil pan of the diesel engine of an automobile, etc., rocker cover, timing-belt cover, separation flask, and other types of chemical-experiment equipment, as well as other assemblies consisting of at least two separable parts.

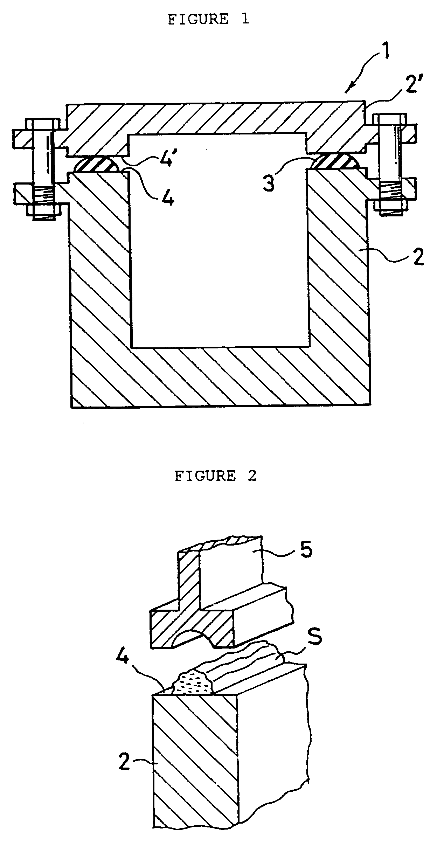

In the following, the sealing method of this invention will be explained in more detail with reference to figures. Figure 1 shows an example of a first embodiment of a container-shaped structural body sealed using the method of this invention. Container-shaped structural body (1) is an assembly of main body (2) and lid (2'). Their fitting surfaces (4), (4') are formed in a planar shape with respect to each other. A sealing material (3) made of the heat-settable silicone rubber is formed in bead form on one fitting surface (4) and is used to seal the area between fitting surfaces (4),(4'). As shown in Figure 2, in this sealing method with the aforementioned configuration, uncured liquid-form silicone rubber (S) is cast in bead form on fitting surface (4) of main body (2) in the longitudinal direction.

The surface of said silicone rubber (S) is covered with heated die (5) having a concave portion, as shown in Figure 3, for molding to form a smooth surface, while being cured under heating. The curing operation may be performed only for the surface without going into the interior. After die (5) is removed, liquid-silicone rubber (S) has its surface molded to form a smooth, convex sealing material (3); hence, when lid (2') has its fitting surface (4') set on top of it, a perfect sealing state can be realized.

In a second embodiment of the present method, one or more longitudinal grooves are formed in at least one of the fitting surfaces. After the heat-settable silicone rubber is cast in bead form in the groove, its surface is cured to form a smooth surface by means of a heated concave die. Consequently, the surface of the silicone rubber formed is smooth and located correctly with respect to the fitting surface. When this sealing method is used repeatedly there is no shift in position of the CIPG of silicone, and thus a high durability seal is made.

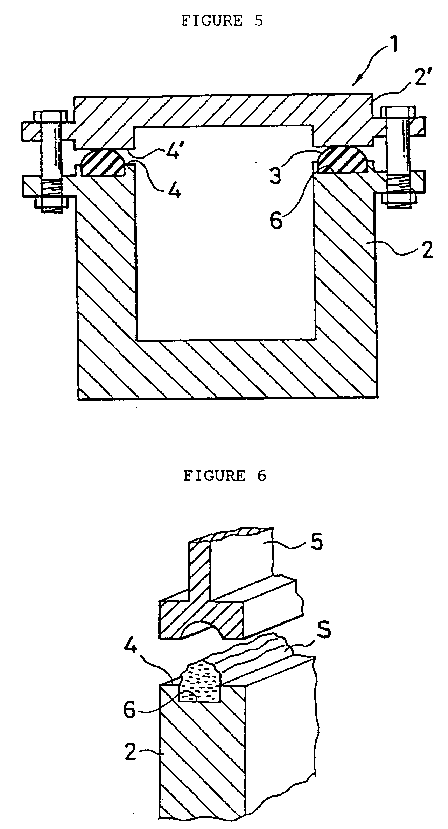

Figure 5 shows an example of the container-shaped structural body sealed using the embodiment of the present method wherein positioning of the CIPG of silicone is maintained at least partially by a longitudinal groove in one of the fitting surfaces. In Figure 5, container-shaped structural body (1) is an assembly of main body (2) and lid (2'). On fitting surface (4) of main body (2), a groove (6) is formed in its longitudinal direction. A dealing material (3) made of heat-settable silicone rubber is formed in bead form in said groove (6) and is used to seal main body (2)and lid (2') between their fitting surfaces (4) and (4').

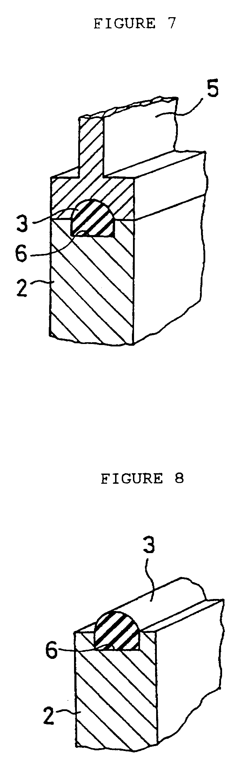

Figure 6 further illustrates the sealing method with the aforementioned groove. In Figure 6, groove (6) is formed in the longitudinal direction on fitting surface (4) of main body (2), and uncured liquid-form silicone rubber (S) is cast in bead form in groove (6). The surface of said silicone rubber (S) is then covered with a heated die (5) having a concave portion as shown in Figure 7 for molding onto a smooth surface, while being cured under heating. The curing operation may be performed only for the surface portion without going to the interior, if desired. After die (5) is removed, liquid silicone rubber (S) has its surface molded into a smooth convex sealing material (3) hence, when lid (2') is set on top of it, a perfect sealing state can be realized. Since groove (6) is used to guide casting of the silicone rubber, the silicone rubber can be set at the correct position to realize precise sealing during the application process. Therefore, even when lid (2') is set and removed repeatedly, there is still no deviation in the position of the CIPG of silicone and the durability of the seal is thus good.

According to this invention, as shown in Figure 6, the amount of the uncured silicone rubber cast in the groove on the fitting surface should be appropriate to ensure that the silicone rubber bulges over fitting surface (4), yet stops below fitting surface (2). In this case, a convex portion should be formed or, fitting surface (4') of lid (2') so that it can fit into groove (6) to compress the sealing material (3). As far as the cross-sectional shape of sealing material (3) is concerned, in addition to the circular arc shape shown in the figure, the square-shaped cross-section or the polygon-shaped cross-section are also allowed.

According to this invention, there is no special limitation on the type of silicone rubber to be used, as long as it has the heat-setting property. Examples of the silicone rubber that may be used include vinyl-radical-containing diorganopolysiloxane; the addition-reaction curing type silicone rubber compositions with the silicon atom bonding a hydrogen-atom-containing organopolysiloxane and a platinum catalyst used as the main ingredients; the condensation-reaction curing type of silicone rubber compositions with the main ingredients including silanol-radical-containing organopolysiloxane, methoxy-radical-containing organopolysiloxane, organotin compound or organotitanium compound and other condensing catalysts; and the organoperoxide curing type of silicone compositions with the vinyl-radical-containing diorganopolysiloxane and organoperoxide as its main ingredients.

Among these, the addition-reaction curing type of silicone rubber composition that has a fast curing rate and that can be cured at a relatively low temperature is preferred. The uncured silicone rubber compositions with a viscosity at 25°C of 100-200,000 poise, (10-20,000 Pa.s) preferably 2,000-20,000 poise, (200-2,000 Pa.s) are used.

According to this invention, there is no special limitation on the moans for casting the uncured silicone rubber composition in bead form. For example, it may be extruded from a container having a nozzle at its tip, by means of compressed air or come other pressing means.

According to this invention, it is preferred that the die used for molding the surface of the uncured silicone rubber is made of a material having as high a heat capacity as possible. The materials that may be used include aluminum, SUS and other types of carbon steel, cast iron, copper, etc. The heating means may be incorporated, or set in the exterior using electricity, gas, IR, rf, etc. As far as the degree of curing of the silicone rubber is concerned, at least the surface has to be cured to a smooth state, while the interior may be incomplete in curing as the fitting surface of the other part is fit, or, it is also possible to performing fitting after the silicone rubber is thoroughly cured. The curing temperature of the silicone rubber is the temperature at which the curing operation is started, and it is not specifically limited. The curing temperature is usually within a range of about 50-200°C.

The following examples are provided to illustrate the present invention.

Example 1. 100 parts by weight of dimethylvinylsiloxy-radical-blocked dimethylpolysiloxane with a viscosity at 25°C (same in the following) of 100 poise, (10 Pa.s) 35 parts by weight of fumed silica with a specific area of 200 m²/g, and 5 parts by weight of hexamethyldisilazane were uniformly blended, followed by heat treatment in vacuum to form a liquid-silicone rubber-based material. Subsequently, 100 parts by weight of the aforementioned liquid-silicone rubber-based material were uniformly blended with 6 parts by weight of trimethylsiloxy-radical-blocked methylhydrogen polysiloxane (with the content of the silicon-atom-bonded hydrogen atom of 1.5 wt %), 0.5 part by weight of a complex of chloroplatinic acid and divinyltetramethyldisiloxane (with a platinum concentration of 0.4 wt %), and 0.2 part by weight of 3,5-dimethyl-1-hexyne-3-ol used as the curing inhibitor, forming a liquid-silicone rubber composition with a viscosity of 15,000 poise (1,500 Pa.s).

The aforementioned liquid-silicone rubber composition was used to seal sealing container (1) consisting of main body (2) and lid (2') as shown in Figure 1. The silicone rubber composition was cast in bead form on fitting surface (4) of main body (2) from a nozzle with a diameter of 2 mm set on the tip portion of a cartridge under a pneumatic pressure of 6 kgf/cm² On the other hand, as shown in Figure 3, die (5) having a semi-spherical cross section with a maximum depth of 3.0 mm and a diameter of 3.5 mm was heated beforehand for 30 minute in an oven at 150°C. It was then set on the surface of said liquid-silicone rubber composition, and was then removed after heating to cure for 10 min, forming a sealing material with smooth surface (3). Fitting surface (4') of lid (2') was set on said sealing material (3). After sealing using bolts, the pressure inside container (1) was increased, and the pneumatic pressure at which the air started leaking through the sealing portion was measured. The results indicated that the air leakage took place when the pneumatic pressure reached 7.0 kgf/cm².

Example 2. For the purpose of comparison, a container was sealed in the same way as in the aforementioned application example, except that the liquid-silicone rubber composition cast on fitting surface (4) of main body (2) was cured directly by setting for 10 min in an oven at 100°C when the interior of the container was pressurized, the pneumatic pressure at which air leakage started from the seating portion was measured, and it was found to be 2.5 kgf/cm².

Example 3. A liquid-silicone rubber composition as described in Example 1 was used to seal a container having a longitudinal groove in a fitting surface as shown in Figure 5. Referring to Figure 6, the silicone rubber composition was cast in bead form into groove (6) with a width of 3.0 mm and a depth of 3.0 mm formed on fitting surface (4) of main body (2) from a nozzle with a diameter of 2 mm set on the tip portion of a cartridge under a pneumatic pressure of 6 kgf/cm², with the bead bulging over fitting surface (4) by a height of about 3.5 mm.

As shown in Figure 7, die (5) having a semispherical cross-section with a maximum depth of 3.0 mm and a diameter of 3.5 mm was heated beforehand for 30 minute in an oven at 150^{o}C. The die was then set on the surface of said liquid-silicone rubber composition (S), and was then removed after heating for curing for 10 minutes, forming a sealing material with a smooth surface (3).

Fitting surface (4') of lid (2') was set on said sealing material (3). After sealing by means of bolts, the pressure inside container (1) was increased, and the pneumatic pressure present when the air started leaking through the sealing portion was measured. The results indicated that the air leakage took place when the pneumatic pressure reached 7.0 kgf/cm².

The sealing state of said container (1) was then released by loosening the bolts. The container was sealed again and pressurized in the same way as above, and the pneumatic pressure present when air started leaking was again measured. It was found that this pressure was 7.0 kgf/cm². It is thus determined that there is virtually no difference in the sealing effect as compared with the previous pressure test.

## Claims

1. A sealing method for a container-shaped structural body comprising a first part and a second part with both parts having planar fitting surfaces facing each other, the method comprising: (a) forming a bead of uncured heat-settable silicone rubber on at least one of the planar fitting surfaces, (b) curing the bead of uncured heat-settable silicone rubber by means of a heated concave molding die, and (c) placing the planar fitting surface of the first part in contact with the planar fitting surface of the second part.

2. A method according to Claim 1, where the bead of uncured heat-settable rubber is formed from an addition-reaction curing type silicone rubber composition having a viscosity within a range of 2,000 to 20,000 poise (200-2,000 Pa.s).

3. The sealing method of Claim 1, wherein at least one of the planar fitting surfaces contain one or more longitudinal grooves.
